# EUROPÄISCHE PATENTSCHRIFT

(11) **EP 0 832 803 B1**
(45) Veröffentlichungstag und Bekanntmachung des Hinweises auf die Patenterteilung: **19.12.2001**
(21) Anmeldenummer: 97115881.1
(22) Anmeldetag: 12.09.1997
(51) Int. Cl.: B60T 15/24

(54) **Zweikreisig hydraulisch ansteuerbares Anhängersteuerventil**
Double circuit hydraulically controlled trailer brake pressure control valve
Valve de commande de pression de freinage d'une remorque commandée par un double circuit hydraulique

(30) Priorität: 26.09.1996 DE 19639464
(43) Veröffentlichungstag der Anmeldung: 01.04.1998
(73) Patentinhaber: KNORR-BREMSE Systeme für Nutzfahrzeuge GmbH, 80809 München (DE)
(72) Erfinder: Roennefarth, Klaus, 70469 Stuttgart (DE); Deja, Siegmund, 71691 Freiberg (DE)

(56) Entgegenhaltungen:
- DE-A- 2 246 236
- DE-C- 19 504 394
- US-A- 3 275 381

## Beschreibung

### Stand der Technik

Die Erfindung geht aus von einem zweikreisig hydraulisch ansteuerbaren Anhängersteuerventil nach der Gattung des Patentanspruchs 1.

Es ist schon ein derartiges Anhängersteuerventil bekannt (US 3 275 381), mit dem in Abhängigkeit vom Druck in zwei hydraulischen Steuerkreisen der Betriebsbremse eines Zugfahrzeugs pneumatischer Bremssteuerdruck erzeugbar ist, um eine pneumatische Anhängerbremsanlage anzusteuern. Eine weitergehende Einflußnahme auf das Anhängersteuerventil ist bei diesem Entwicklungsstand nicht vorgesehen.

Die Erfindung betrifft gemäß Patentanspruch 4 auch eine Bremsanlage für Fahrzeugkombinationen unter Verwendung des Anhängersteuerventils nach Anspruch 1.

Bei der aus US 3 275 381 bekannten Bremsanlage der Fahrzeugkombination wird die Bremsanlage des Anhängefahrzeugs nur bei Bremsungen mittels der Betriebsbremse des Zugfahrzeugs angesteuert. Bei Bremsungen mit der Feststellbremse des Zugfahrzeugs bleibt das Anhängefahrzeug ungebremst. Obwohl auf dem Zugfahrzeug auch Druckluft als Energieträger zur Verfügung steht, sind beim bekannten Entwicklungsstand keine Maßnahmen getroffen, um beispielsweise bei einem Ausfall des hydraulischen Steuermediums dennoch eine Ansteuerung der Bremsanlage des Anhängefahrzeugs sicherzustellen.

### Vorteile der Erfindung

Das erfindungsgemäße Anhängersteuerventil mit den kennzeichnenden Merkmalen des Patentanspruchs 1 hat demgegenüber den Vorteil, daß mit geringem baulichem Aufwand ein zusätzlicher Steuereingriff mit einem Steuermedium geschaffen ist, welches von den übrigen Medien unabhängig ist. Dieser zusätzliche Steuereingriff kann unabhängig von den Signalen der beiden anderen Steuerkreise aktiviert werden, und zwar hinsichtlich der Steuersignalgröße, -dauer und -lage. Der Verwendungsbereich des Anhängersteuerventils wird daher vergrößert.

Durch die in den Unteransprüchen 2 und 3 aufgeführten Maßnahmen sind vorteilhafte Weiterbildungen des erfindungsgemäßen Anhängersteuerventils möglich.

Besonders vorteilhaft ist die Maßnahme nach Unteranspruch 3, da hiermit eine wirksame Trennung der beiden Steuermedien in einem Leckfall gegeben ist.

Die erfindungsgemäße Bremsanlage mit dem kennzeichnenden Merkmal des Patentanspruch 4 ist insofern vorteilhaft, weil mit Hilfe des Steuerventils auf einfache Weise der Steuerdruck moduliert oder in Höhe des Vorratsdrucks zur Anwendung in der Steuerkammer gebracht werden kann.

Durch die in den Unteransprüchen 5 bis 7 aufgeführten Maßnahmen sind weitere vorteilhafte Ausgestaltungen der erfindungsgemäßen Bremsanlage möglich.

Mit der Maßnahme nach Unteranspruch 5 ist erreicht, daß das Anhängersteuerventil für abgestufte oder nicht abgestufte Bremsungen mit Druckanstieg arbeitend im Bremssinn angesteuert wird. Ein Leck in der Leitung zwischen dem Steuerventil und dem Anhängersteuerventil führt daher nicht zu einer ungewollten, gefährlichen Abbremsung des Anhängefahrzeugs, wie dies bei einer mit Druckabfall arbeitenden Steuerung der Fall wäre.

Dabei kann gemäß Unteranspruch 6 das Steuerventil dem direkten Zugriff durch den Fahrer des Zugfahrzeugs ausgesetzt oder fernbetätigt nahe dem oder am Anhängersteuerventil angeordnet sein.

Bei der Maßnahme nach Unteranspruch 7 ist eine Betätigung des Steuerventils mit dem Betätigen der Feststellbremse des Zugfahrzeugs in vorteilhafter Weise gekoppelt.

### Zeichnung

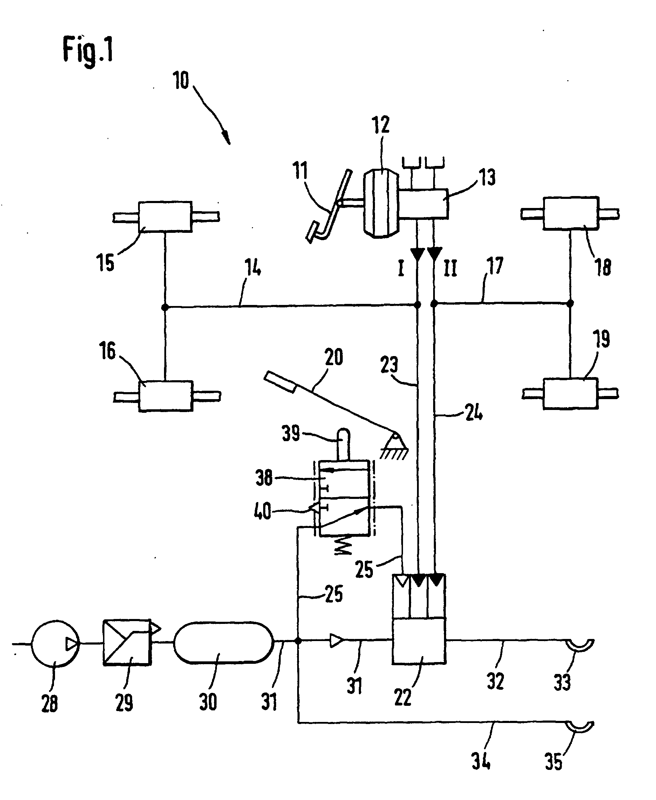

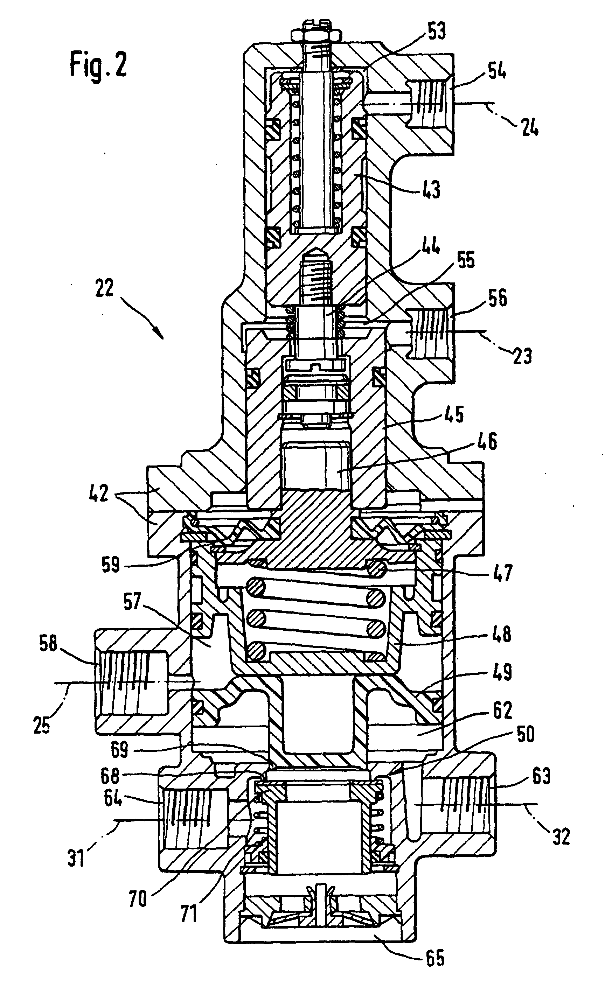

Ein Ausführungsbeispiel der Erfindung ist in der Zeichnung vereinfacht dargestellt und in der nachfolgenden Beschreibung näher erläutert. Es zeigen Figur 1 ein Schaltschema einer Bremsanlage eines Zugfahrzeugs mit zweikreisig hydraulisch ansteuerbarer Betriebsbremse und mit einem dreikreisig hydraulisch und pneumatisch ansteuerbaren Anhängersteuerventil sowie Figur 2 einen Längsschnitt des Anhängersteuerventils.

### Beschreibung des Ausführungsbeispiels

Eine in Figur 1 der Zeichnung dargestellte Zugwagen-Bremsanlage 10 hat einen mit einem Bremspedal 11 über einen Bremskraftverstärker 12 betätigbaren zweikreisigen Hauptbremszylinder 13. Vom Hauptbremszylinder 13 geht eine Bremsleitung 14 eines Bremskreises I zu hydraulisch betätigbaren Radbremsen 15, 16 aus, welche einer ersten Achse des nicht gezeichneten Zugfahrzeugs zugeordnet sind. An eine Bremsleitung 17 eines Bremskreises II der Zugwagen-Bremsanlage 10 sind hydraulische Radbremsen 18, 19 angeschlossen, welche einer zweiten Fahrzeugachse zugeordnet sind. Die genannten Elemente bilden eine zweikreisige hydraulische Betriebsbremse der Zugwagen-Bremsanlage 10. Zu dieser gehört außerdem eine mechanische Feststellbremse, von der in Figur 1 lediglich der vom Fahrzeugführer betätigbare Feststellbremshebel 20 dargestellt ist.

Das Zugfahrzeug ist mit eine pneumatische Betriebsbremse aufweisenden Anhängefahrzeugen kuppelbar. In der eingangs erwähnten US 3 275 381 ist eine derartige Bremsanlage auf einem Anhängefahrzeug angedeutet. Die in Figur 1 dargestellte Zugwagen-Bremsanlage 10 weist daher zur Ansteuerung der in der Zeichnung nicht dargestellten Anhänger-Bremsanlage ein Anhängersteuerventil 22 auf. Das in Figur 1 lediglich als Schaltsymbol wiedergegebene Anhängersteuerventil 22 ist dreifach angesteuert, und zwar über zwei an die Bremskreise I bzw. II der Betriebsbremse der Zugwagen-Bremsanlage 10 angeschlossene hydraulische Steuerleitungen 23 und 24 sowie ferner über eine pneumatische Steuerleitung 25. Das Anhängersteuerventil 22 ist weiter unter in seinem konstruktiven Aufbau anhand der Figur 2 der Zeichnung erläutert.

Zur Versorgung der auf dem Anhängefahrzeug befindlichen pneumatischen Betriebsbremse ist der Zugwagen wenigstens mit einem Luftkompressor 28, einem Druckregler 29 sowie einem Luftbehälter 30 ausgestattet. Von dem Luftbehälter 30 führt eine Versorgungsleitung 31 zum Anhängersteuerventil 22. Von diesem geht eine Bremsleitung 32 aus, welche in einem Kupplungskopf 33 endet. Von der Versorgungsleitung 31 zweigt außerdem eine Vorratsleitung 34 mit einem Kupplungskopf 35 ab. An die beiden Kupplungsköpfe 33 und 35 ist die entsprechend ausgebildete Anhänger-Bremsanlage anschließbar. Von der Versorgungsleitung 31 geht schließlich noch die erwähnte pneumatische Steuerleitung 25 zum Anhängersteuerventil 22 aus.

Durch Betätigen des Hauptbremszylinders 13 wird Druck in,die Radbremsen 15, 16, 18, 19 des Zugfahrzeugs eingesteuert. Zugleich wird über die hydraulischen Steuerleitungen 23, 24 das Anhängersteuerventil 22 im Bremssinn umgeschaltet und über die Bremsleitung 32 die pneumatische Betriebsbremse des Anhängefahrzeugs angesteuert. Zum von der Betätigung der Betriebsbremse des Zugfahrzeugs unabhängigen Betätigen der Betriebsbremse des Anhängefahrzeugs ist in der pneumatischen Steuerleitung 25 ein Steuerventil 38 vorgesehen, mit dem das Anhängersteuerventil 22 für abstufbare oder nichtabstufbare Bremsungen ansteuerbar ist. Das Steuerventil 38 ist als 3/2-Wegeventil ausgebildet. Bei betätigter Feststellbremse des Zugfahrzeugs, das heißt bei angezogenen Feststellbremshebel 20 (wie dargestellt) nimmt das Steuerventil 38 eine federbetätigte Stellung ein, in welcher die pneumatische Steuerleitung 25 durchgeschaltet ist. Ist das Steuerventil 38 nichtdrosselnd ausgebildet, so wird durch die Steuerleitung 25 Vorratsdruck zum Anhängersteuerventil 22 durchgeschaltet. Durch Lösen der Feststellbremse des Zugwagens, also durch Niederlegen des Feststellbremshebels 20, ist das Steuerventil 38 durch einen mit dem Feststellbremshebel zusammenwirkenden Stößel 39 in seine andere Stellung umschaltbar, in welcher der von der Versorgungsleitung 31 herangeführte Teil der Steuerleitung 25 abgesperrt und der an das Anhängersteuerventil 22 angeschlossene Teil der Steuerleitung 25 mit einer Druckentlastungsstelle 40 verbunden ist. Bei einer drosselnden Ausbildung des Steuerventils 38, wie dies in Figur 1 mit strichpunktierten Linien am Ventilsymbol angedeutet ist, kann das Steuerventil 38 beliebige Zwischenstellungen zwischen den beiden erwähnten Ventilendstellungen einnehmen und das Anhängersteuerventil 22 im Sinne einer abstufbaren Bremsung des Anhängefahrzeugs mit Steuerdruck in der Druckspanne von 0 bar bis Vorratsdruck angesteuert werden. Statt des Stößels 39 kann das Steuerventil 38 auch abhängig oder unabhängig von der Betätigung der Feststellbremse des Zugfahrzeugs elektromagnetisch umgeschaltet oder in beliebige Zwischenstellungen gesteuert werden.

Das in Figur 2 in nichtbetätigter Stellung dargestellte Anhängersteuerventil 22 hat folgenden konstruktiven Aufbau:

In einem zweiteiligen Gehäuse 42 sind von oben nach unten achsgleich angeordnet: ein erster Steuerkolben 43, ein mit diesem durch eine Koppelschraube 44 verbundener zweiter Steuerkolben 45, ein in diesem aufgenommener Druckbolzen 46, der über eine Druckfeder 47 an einem dritten Steuerkolben 48 abgestützt ist, ein Rückwirkkolben 49 und schließlich ein Doppelsitzventil 50.

Der erste Steuerkolben 43 begrenzt eine Steuerkammer 53, welche mit einem Anschluß 54 für die hydraulische Steuerleitung 24 des Bremskreises II der Betriebsbremse der Zugwagen-Bremsanlage 10 in Verbindung steht. Zwischen dem ersten Steuerkolben 43 und dem zweiten Steuerkolben 45 befindet sich eine zweite Steuerkammer 55 mit einem zugeordneten Anschluß 56 für die hydraulische Steuerleitung 23 des Kreises I der Zugwagen-Betriebsbremse. Eine dritte Steuerkammer 57 ist zwischen dem dritten Steuerkolben 48 und dem Rückwirkkolben 49 vorgesehen. Diese Steuerkammer 57 steht durch einen Anschluß 58 des Gehäuses 42 mit der das Steuerventil 38 für die Betätigung der pneumatischen Betriebsbremse des Anhängefahrzeugs enthaltenden pneumatischen Steuerleitung 25 in Verbindung. In Steuerkammer 57 ist mittels des Steuerventils 38 Steuerluft für abgestufte Bremsungen der Anhängerbremsanlage oder mit Vorratsdruck einsteuerbar. Zwischen den beiden hydraulischen Steuerkammern 53 und 55 der hintereinander angeordneten Steuerkolben 43 und 45 einerseits und der pneumatischen Steuerkammer 57 des Steuerkolbens 48 andererseits ist im Gehäuse 42 des Anhängersteuerventils 22 eine Membrane 59 zur fluiddichten Trennung angeordnet.

Unterhalb des Rückwirkkolbens 49 befindet sich eine Arbeitskammer 62 des Anhängersteuerventils 22, welche durch einen Gehäuseanschluß 63 mit der Bremsleitung 32 in Verbindung steht. Auf der diesem Anschluß 63 gegenüberliegenden Seite des Gehäuses 42 ist ein Anschluß 64 für die Versorgungsleitung 31 vorgesehen. Schließlich hat das Gehäuse 42 einen nach unten gerichteten Abgang 65 zu einer Druckentlastungsstelle.

Das Doppelsitzventil 50 hat einen gehäusefesten Einlaßsitz 68 und einen am Rückwirkkolben 49 ausgebildeten Auslaßsitz 69. Zum Doppelsitzventil 50 gehört ferner ein Ventilkörper 70, an dem eine Schließfeder 71 angreift. Der Ventilkörper 70 bildet mit dem Einlaßsitz 68 ein Einlaßventil 68/70; mit dem Auslaßsitz 69 am Rückwirkkolben 49 bildet der Ventilkörper 70 ein Auslaßventil 69/70.

Das Anhängersteuerventil 22 ist in nichtbetätigter Stellung dargestellt, in welcher das Auslaßventil 69/70 geöffnet ist und eine Verbindung des Bremsleitungsanschlusses 63 mit der Druckentlastungsstelle 65 herstellt. Durch Druckeinsteuerung in wenigstens eine der drei Steuerkammern 53, 55, 57 ist das Einlaßventil 68/70 in seine Offenstellung überführbar, in welcher der Vorratsluftanschluß 64 über die Arbeitskammer 62 mit dem Bremsleitungsanschluß 63 verbunden, die Verbindung zur Druckentlastungsstelle 65 jedoch abgesperrt ist. Der Druck in der Arbeitskammer 62 bewirkt eine Kraft auf den Rückwirkkolben 49, so daß sich dieser mit dem dritten Steuerkolben 48 entgegen der Kraft der Druckfeder 47 relativ zum doppelsitzventilnahen zweiten Steuerkolben 46 verschiebt. Das Doppelsitzventil 50 nimmt daraufhin seine Abschlußstellung ein, in welcher das Einlaßventil 68/70 und das Auslaßventil 69/70 geschlossen sind. Steuerdruckabsenkung hat das Öffnen des Auslaßventils 69/70 zur Folge. Mit dem Doppelsitzventil 50 ist somit in bekannter Weise Druckaufbau, Druckhalten und Druckabbau in der Arbeitskammer 62 steuerbar.

## Patentansprüche

1. Zweikreisig hydraulisch ansteuerbares Anhängersteuerventil (22) für pneumatische Anhängerbremsanlagen, mit
einem Gehäuse (42) des Anhängersteuerventils (22), in dem hintereinander ein erster Steuerkolben (43) und ein zweiter Steuerkolben (45) angeordnet sind, die mit hydraulischem Steuerdruck einer Zugwagen-Bremsanlage (10) beaufschlagbar sind,
einem Rückwirkkolben (49), der einen Auslaßsitz (69) aufweist, wobei der zweite Steuerkolben (45) wenigstens mittelbar mit dem Rückwirkkolben (49) verbunden ist,
einem Doppelsitzventil (50), das durch Verschieben der Steuerkolben (43, 45) betätigbar ist und das ein Einlaßventil (68/70) und ein Auslaßventil (69/70) und einen längsverschieblichen Ventilkörper (70) aufweist,
wobei das Einlaßventil (68/70) durch den Ventilkörper (70) und einen Einlaßsitz (68) gebildet ist, zum Öffnen/Schließen einer Druckverbindung zwischen einem Vorratsluftanschluß (64) und einem Bremsleitungsanschluß (63) des Anhängersteuerventils (22),
wobei das Auslaßventil (69/70) durch den Ventilkörper (70) und den Auslaß-sitz (69) gebildet ist, zum Öffnen/Schließen einer Verbindung zwischen dem Bremsleitungsanschluß (63) und einer Druckentlastungsstelle (65), und wobei der zweite Steuerkolben (45) in Bezug auf den ersten Steuerkolben (43) doppelsitzventilnah angeordnet ist,
**dadurch gekennzeichnet,**
**daß** ein dritter Steuerkolben (48) vorgesehen ist, der zwischen dem zweiten Steuerkolben (45) und dem Rückwirkkolben (49) angeordnet ist, und
**daß** eine Steuerkammer (57) vorgesehen ist, die durch einen Raum zwischen dem dritten Steuerkolben (48) und dem Rückwirkkolben (49) gebildet ist und die mit einem Druckanschluß (58) verbunden ist, zum Verschieben des Rückwirkkolbens (49) bzw. des Rückwirkkolbens (49) und des dritten Steuerkolbens (48) durch abgestuftes Einsteuern von Steuerluft bzw. Vorratsdruck über den Druckanschluß (58).

2. Anhängersteuerventil nach Anspruch 1, **dadurch gekennzeichnet, daß** der dritte Steuerkolben (48) relativ zum doppelsitzventilnahen Steuerkolben (45) längsverschiebbar und eine Druckfeder (47) zwischen den beiden Steuerkolben (45, 48) angeordnet ist.

3. Anhängersteuerventil nach Anspruch 1, **dadurch gekennzeichnet, daß** im Gehäuse (43) des Anhängersteuerventils (22) eine die hydraulischen Steuerkolben (43, 45) von dem dritten, pneumatischen Steuerkolben (48) trennende Membrane (59) angeordnet ist.

4. Bremsanlage für Fahrzeugkombinationen aus einem Zugfahrzeug mit hydraulisch steuerbarer Betriebsbremse und mechanischer Feststellbremse sowie einem von einem Luftkompressor (28) versorgten Luftbehälter (30) und einem Anhängefahrzeug mit pneumatischer Betriebsbremse, wobei das Zugfahrzeug das Anhängersteuerventil (22) nach Anspruch 1 trägt, von dem eine Bremsleitung (32) und eine mit dem Luftbehälter (30) verbundene Vorratsleitung (34) zum Anhängefahrzeug ausgeht, **dadurch gekennzeichnet, daß** mit dem Luftbehälter (30) ein Steuerluft abgestuft oder mit Vorratsdruck an die Steuerkammer (57) des Anhängersteuerventils (22) abgebendes Steuerventil (38) verbunden ist.

5. Bremsanlage nach Anspruch 4, **dadurch gekennzeichnet, daß** das Steuerventil (38) ein nichtdrosselndes oder ein drosselndes 3/2-Wegeventil ist, welches in seiner einen Endstellung federbetätigt Steuerluft zur Steuerkammer (57) des Anhängersteuerventils (22) durchsteuert und in seiner anderen Endstellung die Steuerkammer (57) mit einer Druckentlastungsstelle (40) verbindet.

6. Bremsanlage nach Anspruch 5, **dadurch gekennzeichnet, daß** das Steuerventil (38) mechanisch oder elektromagnetisch betätigt in seine andere Endstellung schaltbar ist.

7. Bremsanlage nach Anspruch 6, **dadurch gekennzeichnet, daß** das Steuerventil (38) von einem Feststellbremshebel (20) des Zugfahrzeugs in seine andere Endstellung schaltbar ist.

## Claims

1. Hydraulically controlled double circuit trailer brake pressure control valve (22) for pneumatic trailer brake systems, including
a housing (42) of said trailer brake pressure control valve (22), in which a first control piston (43) and a second control piston (45) are disposed in a tandem arrangement and adapted to be subjected to a hydraulic control pressure of a towing vehicle brake system (10),
a reaction piston (49) including an outlet seat (69), with said second control piston (45) being connected to said reaction piston (49) at least indirectly,
a double seat valve (50) adapted to be actuated by displacement of said control pistons (43, 45) and including an inlet valve (68/70) and an outlet valve (69/70) as well as a longitudinally displaceable valve body (70),
wherein said inlet valve (68/70) is formed by said valve body (70) and an inlet seat (68) for opening/closing a pressure communication between an air reservoir port (64) and a brake air conduit port (63) of said trailer brake pressure control valve (22),
wherein said outlet valve (69/70) is formed by said valve body (70) and said outlet seat (69) for opening/closing a communication between said brake air conduit port (63) and a pressure relief point (65) and wherein said second control piston (45) is arranged in the vicinity of said double seat valve relative to said first control piston (43),
**characterised in**
**that** a third control piston (48) is provided that is disposed between said second control piston (45) and said reaction piston (49), and
**that** a control compartment (57) is provided that is formed by a space between said third control piston (48) and said reaction piston (49) and that is connected to a pressure port (58) for displacement of said reaction piston (49) or said reaction piston (49) and said third control piston (48) by graded controlled supply of control air or reserve pressure via said pressure port (58).

2. Trailer brake pressure control valve according to Claim 1, **characterised in that** said third control piston (48) is longitudinally displaceable relative to said control piston (45) in the vicinity of said double seat valve and that a pressure spring (47) is disposed between said two control pistons (45, 48).

3. Trailer brake pressure control valve according to Claim 1, **characterised in that** a membrane (59) is disposed in said housing (43) of the trailer brake pressure control valve (22), that separates said hydraulic control pistons (43, 45) from said third pneumatic control piston (48).

4. Brake system for multi-unit vehicles consisting of a towing vehicle with a hydraulically controllable service brake and a mechanical parking brake as well as an air reservoir (30) supplied by an air compressor (28) as well as of a trailer vehicle with a pneumatic service brake, wherein said towing vehicle carries the trailer brake pressure control valve (22) according to Claim 1, from which a brake air conduit (32) and a reserve conduit (34) connected to said air reservoir (30) are extending, **characterised in that** a control valve (38) is connected to said air reservoir (30), which issues control air to said control compartment (57) of said trailer brake pressure control valve (22) in a graded form or at the reserve pressure.

5. Brake system according to Claim 4, **characterised in that** said control valve (38) is a non-throttling or a throttling 3/2-way valve that, in its first terminal position, guides control air to said control compartment (57) of the trailer brake pressure control valve (22) under spring action whilst, in its other terminal position, it connects said control compartment (57) to a pressure relief point (40).

6. Brake system according to Claim 5, **characterised in that** said control valve (38) is adapted to be mechanically or electro magnetically actuated for being switched into its other terminal position.

7. Brake system according to Claim 6, **characterised in that** said control valve (38) can be switched into its other terminal position by a parking brake lever (20) of the trailer vehicle.

## Revendications

1. Robinet (22), commandé à double circuit hydraulique, de commande de pression de freinage d'une remorque, comprenant
un carter (42) dudit robinet de commande de pression de freinage de remorque (22), dans lequel un premier piston de commande (43) et un deuxième piston de commande (45) sont disposés en tandem et aptes à être soumis à une pression de commande hydraulique d'un système des freins du véhicule tracteur (10),
un piston rétroactif (49) à un siège de sortie (69), ledit deuxième piston de commande (45) étant raccordé audit piston rétroactif (49) au moins indirectement,
un robinet à double siège (50) apte à être actionné par déplacement desdits pistons de commande (43, 45) et comprenant une soupape d'amenée (68/70) et une soupape de sortie (69/70) ainsi qu'un corps de soupape (70) déplaçable en sens longitudinal,
dans lequel ladite soupape d'amenée (68/70) est constituée par ledit corps de soupape (70) et par un siège d'amenée (68) à ouvrir/fermer une communication de pression entre un raccord de réservoir d'air (64) et un raccord de conduit d'air de freinage (63) dudit robinet de commande de pression de freinage de remorque (22),
dans lequel ladite soupape de sortie (69/70) est constituée par ledit corps de soupape (70) et par ledit siège de sortie (69) à ouvrir/fermer une communication entre ledit raccord de conduit d'air de freinage port (63) et un point de réduction de pression (65) et dans lequel ledit deuxième piston de commande (45) est disposé à proximité dudit robinet à double siège, relativement audit premier piston de commande (43),
**caractérisé en ce**
**qu'**un troisième piston de commande (48) est compris, qui est disposé entre ledit deuxième piston de commande (45) et ledit piston rétroactif (49), et
en ce qu'une chambre de commande (57) est formée, qui est constituée par un espace entre ledit troisième piston de commande (48) et ledit piston rétroactif (49) et qui est raccordé à un raccord de pression (58) pour le déplacement piston rétroactif (49) ou dudit piston rétroactif (49) et ledit troisième piston de commande (48) par amenée graduée réglée de l'air de réglage ou d'une pression de réserve via ledit raccord de pression (58).

2. Robinet de commande de pression de freinage de remorque selon la revendication 1, **caractérisé en ce que** ledit troisième piston de commande (48) est déplaçable en sens longitudinal, relativement audit piston de commande (45) à proximité dudit robinet à double siège, et **en ce qu'**un ressort de pression (47) est disposé entre lesdits deux pistons de commande (45, 48).

3. Robinet de commande de pression de freinage de remorque selon la revendication 1, **caractérisé en ce qu'**une membrane (59) est disposée dans ledit carter (43) du robinet de commande de pression de freinage de remorque (22), qui sépare lesdits pistons de commande hydrauliques (43, 45) dudit troisième piston de commande pneumatique (48).

4. Système des freins pour des véhicules combinés à plusieurs unités, composés d'un véhicule tracteur à un frein de service à commande hydraulique et à un frein d'arrêt mécanique, ainsi qu'un réservoir d'air (30) alimenté par un compresseur d'air (28), et d'une remorque à un frein de service pneumatique, dans lequel ledit véhicule tracteur porte le robinet de commande de pression de freinage de remorque (22) selon la revendication 1, duquel s'étendent un conduit d'air de freinage (32) et un conduit de réserve (34), qui est raccordé audit réservoir d'air (30), **caractérisé en ce qu'**une vanne pilote (38) est reliée audit réservoir d'air (30), qui sort de l'air de réglage à ladite chambre de commande (57) du robinet de commande de pression de freinage de remorque (22) sous forme graduée ou à la pression de réserve.

5. Système des freins selon la revendication 4, **caractérisé en ce que** ladite vanne de pilotage (38) est du type étranglant ou une vanne à /3 voies, qui, en sa première position extrême, passe de l'air de réglage à ladite chambre de commande (57) du robinet de commande de pression de freinage de remorque (22) sous l'effort d'un ressort, pendant qu'elle relie ladite chambre de commande (57) à un point de réduction de pression (40), quand elle se trouve en son autre position extrême.

6. Système des freins selon la revendication 5, **caractérisé en ce que** ladite vanne de pilotage (38) est apte à être actionnée sous forme mécanique ou électromécanique, afin d'être commutée à son autre position extrême.

7. Système des freins selon la revendication 6, **caractérisé en ce que** ladite vanne de pilotage (38) est commutable dans son autre position extrême moyennant un levier de frein d'arrêt (20) de la remorque.
